# EUROPÄISCHE PATENTSCHRIFT

(11) **EP 2 730 357 B1**
(45) Veröffentlichungstag und Bekanntmachung des Hinweises auf die Patenterteilung: **30.08.2017**
(21) Anmeldenummer: 13188224.3
(22) Anmeldetag: 11.10.2013
(51) Int. Cl.: B23B 31/12

(54) **Bohrfutter**
Drill chuck
Mandrin de serrage

(30) Priorität: 12.11.2012 DE 102012110809
(43) Veröffentlichungstag der Anmeldung: 14.05.2014
(73) Patentinhaber: Röhm GmbH, 89567 Sontheim/Brenz (DE)
(72) Erfinder: Schenk, Peter, 89168 Niederstotzingen (DE); Baumann, Hans, 89567 Sontheim (DE); Nusser, Markus, 89441 Bächingen (DE)
(74) Vertreter: Hentrich Patentanwälte PartG mbB

(56) Entgegenhaltungen:
- EP-A1- 0 164 516
- EP-B1- 0 728 549
- DE-A1- 2 354 832
- DE-A1- 4 445 858
- DE-B4- 19 581 725

## Beschreibung

Die Erfindung betrifft ein Bohrfutter gemäß dem Oberbegriff des Anspruchs 1. Aus der EP 0 710 520 B1, ist ein Bohrfutter mit einer Sperreinrichtung bekannt, bei dem das aus einem Federring bestehende Sperrglied an der Spannhülse abgestützt ist und über die Spannhülse radial verstellt werden kann. Durch diese Sperreinrichtung, die sich in sehr großen Stückzahlen in dem Markt bewährt hat, wirkt auf die Spannhülse eine nach außen gerichtete Kraft, die es notwendig macht, die Spannhülse radial am Futterkörper abzustützen, um einen optimalen Rundlauf gewährleisten zu können.

Zur Abstützung der Spannhülse an dem Futterkörper ist aus der DE 20 2005 016 952 U1 eine Abschlussscheibe bekannt, die am rückwärtigen Ende des Bohrfutters die Spannhülse am Futterkörper abstützt.

Aus der EP 0 728 549 B1 ist ein Kurzbohrfutter in Einklang mit dem Oberbegriff des Anspruchs 1 bekannt, bei dem beim Verstellen der Spannbacken zu größeren Einspanndurchmessern diese rückwärts aus den Führungsaufnahmen austreten und in ihrer Extremstellung über das rückwärtige Ende des Futterkörpers hinausstehen. Der über das rückwärtige Ende des Futterkörpers hinausstehende Teil der Spannbacken wird dabei von dem Spindelgehäuse einer an die Spindelaufnahme anschließbaren Maschinenspindel aufgenommen.
Bei Kurzbohrfuttern, die eine Verriegelungseinheit aufweisen, ist es jedoch aufgrund der Führung der Spannbacken nicht möglich, eine Abschlussscheibe am rückwärtigen Ende des Futterkörpers anzubringen, um die Spannhülse daran zu führen, da diese Abschlussscheibe Durchbrechungen aufweisen müsste, um ein Austreten der Spannbacken über das rückwärtige Ende des Futterkörpers hinaus zu gewährleisten. Somit tritt bei diesen Bohrfuttern häufig das Problem eines beeinträchtigten Rundlaufes auf, der zu einer Beeinträchtigung der Lebensdauer und zu ungewollten Vibrationen führt.

Der Erfindung liegt daher die Aufgabe zugrunde, ein Bohrfutter der eingangs genannten Art so auszubilden, dass die Rundlaufeigenschaften verbessert sind.

Diese Aufgabe wird nach der Erfindung bei einem Bohrfutter mit den Merkmalen des Anspruchs 1 gelöst. Durch die Positionierung des Stützringes zwischen den Mündungen und den Anschneidungen kann die Abstützung der Spannhülse an dem Futterkörper auf einfache Art und Weise realisiert werden, ohne das rückwärtige Ende des Futterkörpers zu überdecken.

Als vorteilhaft hat es sich gezeigt, wenn die Spannbacken in der Offenstellung aus den Mündungen über das rückwärtige Ende des Futterkörpers hinausragen. Durch eine geeignete Positionierung des Stützringes an dem Futterkörper lässt sich eine radiale Abstützung der Spannhülse erreichen.

Als besonders vorteilhaft hat es sich erwiesen, wenn der Gewindering drehfest mit einer ein Sperrglied tragenden Zwischenhülse verbunden ist, wobei das Sperrglied unter der Kraft einer Feder radial an der Spannhülse abgestützt ist und mittels einer an der Spannhülse ausgebildeten Steuerkurve in Sperrausnehmung einrückbar ist, die auf einem koaxialen Kranz angeordnet dem Futterkörper drehfest zugeordnet sind. Dadurch wird auf bewährte Weise ein unbeabsichtigtes Öffnen der Spannbacken unterbunden, was die Funktionstüchtigkeit des erfindungsgemäßen Bohrfutters positiv beeinflusst. In diesem Zusammenhang hat es sich weiterhin bewährt, wenn das Sperrglied als am Innenumfang der Zwischenhülse gelagerter Federbügel gebildet ist, der mit einem Nocken durch einen Durchgriff der Zwischenhülse in die Steuerkurve eingreift und durch eine Drehung der Spannhülse relativ zu der Zwischenhülse zwischen einer in die Sperrausnehmungen eingerückten Stellung und einer ausgerückten Stellung verstellbar ist. Somit kann durch eine einfache Drehung der Spannhülse das Sperrglied über die Steuerkurve verstellt werden.

Weiterhin als günstig hat es sich erwiesen, wenn der Stützring zur Befestigung an dem Futterkörper einen zylindrischen Abschnitt und einen radialen Kragen zur Führung der Spannhülse umfasst. Durch den flächigen, zylindrisch geformten Abschnitt des Stützringes ist eine einfache Befestigung an dem Futterkörper möglich, wobei es im Rahmen der Erfindung auch denkbar ist, dass der Stützring an dem Futterkörper drehbar gelagert ist. Weiterhin ist durch den radialen Kragen, der vorzugsweise an dem rückwärtigen Ende des Futterkörpers zuweisenden Ende des zylindrischen Abschnitts angeordnet ist, eine äußerst einfache Möglichkeit gegeben, die Spannhülse am Futterkörper abzustützen. Im Rahmen der Erfindung ist es natürlich auch vorgesehen, dass der zylindrisch geformte Teil des Stützrings vollumfänglich an der Spannhülse abgestützt ist.

Als besonders günstig hat es sich weiterhin gezeigt, wenn der Stützring drehfest und axial unverschiebbar an dem Futterkörper befestigt ist. Dadurch kann beispielsweise neben der radialen Abstützung der Spannhülse an dem Futterkörper auch eine axiale Abstützung weiterer Bauteile, die dem Futterkörper zugeordnet sind, an dem Stützring erfolgen.

Hierbei hat es sich als vorteilhaft erwiesen, wenn der Stützring auf den Futterkörper gepresst ist, was sich positiv auf den Montageaufwand auswirkt. In diesem Zusammenhang ist es zudem besonders günstig, wenn am Futterkörper im Bereich zwischen den Mündungen und den Anschneidungen außenumfangsseitig formschlussbegünstigende Zähne ausgebildet sind. Dadurch ist eine sehr sichere Verbindung zwischen dem Stützring und dem Futterkörper gegeben, die zudem einen lediglich geringen Montageaufwand erforderlich macht.

Alternativ, aber nicht zur Erfindung gehörend, ist es jedoch auch vorgesehen, dass der Stützring einstückig mit dem Futterkörper gebildet ist. Dies wirkt sich positiv auf den

Herstellungsprozess aus, hierdurch das Befestigen des Stützringes auf dem Futterkörper entfällt.

Weiterhin als vorteilhaft hat es sich erwiesen, wenn der Stützring über das rückwärtige Ende des Futterkörpers hinaus als eine Stützhülse axial verlängert ist, und wenn die Spannhülse unmittelbar an dem Stützring geführt ist. Durch die axiale Verlängerung der Stützhülse über das rückwärtige Ende des Futterkörpers hinaus kann insbesondere ein Eindringen von Bohrstaub in das Innere des Bohrfutters vermieden werden, da beim Anschließen einer Bohrspindel es zu einer Überlappung des Maschinengehäuses mit der Stützhülse kommt. Als gleichwertig hat es sich in diesem Zusammenhang gezeigt, wenn die Zwischenhülse über das rückwärtige Ende des Futterkörpers hinaus axial verlängert ist, und wenn die Spannhülse mittelbar über die Zwischenhülse an dem Stützring geführt ist. Auch hiermit ist auf einfache Art und Weise ein Überlapp mit dem Maschinengehäuse einer Bohrspindel gegeben, wodurch ebenfalls ein Verschmutzen des Bohrfutters vermieden wird.

Als besonders günstig hat es sich bei einem erfindungsgemäßen Bohrfutter gezeigt, wenn der Gewindering einstückig gebildet ist und durch die Spannhülse unmittelbar oder mittelbar axial gesichert ist. Dadurch kann das erfindungsgemäße Bohrfutter auf einfach Art und Weise montiert werden, indem die einzelnen Teile des Bohrfutters von vorn - also von der der Spindelaufnahme abgewandten Seite her - auf den Futterkörper aufgebracht werden.

Im Folgenden wird die Erfindung an in den Zeichnungen dargestellten Ausführungsbeispielen näher erläutert; es zeigen:
- Fig. 1: ein teilgeschnittenes Bohrfutter mit axial über den Futterkörper hinaus verlängertem Stützring;
- Fig. 2: Explosionsdarstellung des Bohrfutters mit axial verlängertem Stützring;
- Fig. 3: teilgeschnittene Darstellung eines Bohrfutters mit einer axial verlängerten Zwischenhülse, und
- Fig. 4: eine Explosionsdarstellung eines Bohrfutters mit einer axial verlängerten Zwischenhülse.

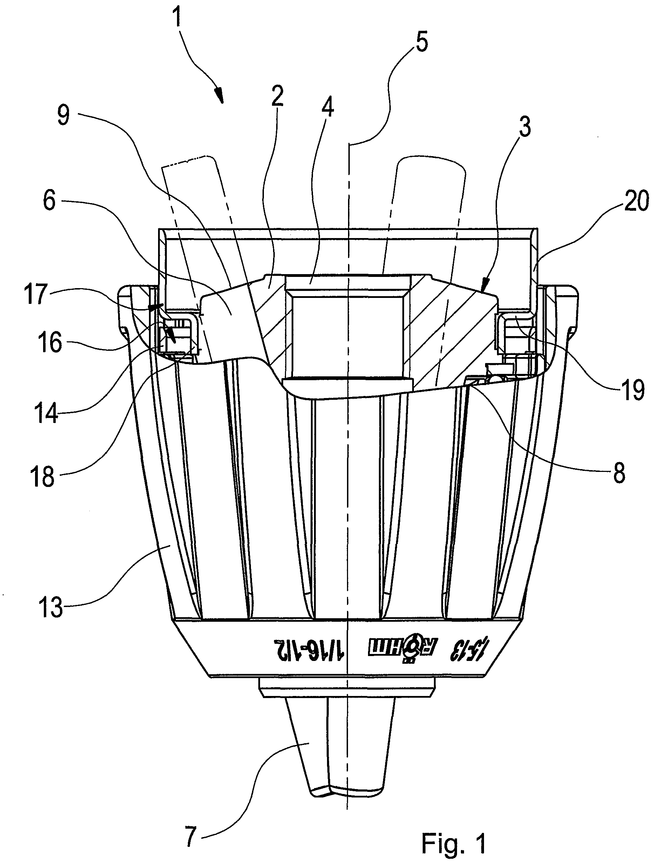

Figur 1 zeigt eine erste Ausführungsform eines erfindungsgemäßen Bohrfutters 1, mit einem Futterkörper 2, der an seinem rückwärtigen Ende 3 eine Spindelaufnahme 4 aufweist. Im Futterkörper 2 verlaufen geneigt zur Futterachse 5 Führungskanäle 6, in denen Spannbacken 7 geführt sind. Die Führungskanäle 6 schneiden dabei den Futterkörper 2 radial in Anschneidungen 8 und treten aus dem Futterkörper 2 aus Mündungen 9 heraus, die an dessen rückwärtigen Ende 3 gelegen sind. Der Futterkörper 2 ist hier als Kurzfutterkörper gebildet und die in den Führungskanälen 6 geführten Spannbacken 7 ragen in der Offenstellung über das rückwärtige Ende 3 des Futterkörpers 2 hinaus. Die Spannbacken 7 stehen über eine Verzahnung 10 mit einem Spanngewinde 11 eines am Futterkörper 2 drehbar geführten und die Anschneidungen 8 überdeckenden Gewinderinges 12 im Eingriff. Der Gewindering 12 kann mittels einer am Futterkörper 2 geführten Spannhülse 13 verstellt werden und weist weiterhin eine Zwischenhülse 14 auf, an der ein als Federbügel 15 gebildetes Sperrglied 16 gelagert ist, das mit einer an der Spannhülse 13 ausgebildeten Steuerkurve wechselwirkt und auf diese eine Federkraft ausübt und damit die Rundlaufeigenschaften negativ beeinträchtigt. Um dies zu vermeiden, ist zur radialen Abstützung der Spannhülse 13 an dem Futterkörper 2 ein Stützring 17 vorgesehen, der mit einem zylindrischen Abschnitt 18 an dem Futterkörper 2 befestigt ist und einen radialen Kragen 19 aufweist, um die Spannhülse 13 an dem Futterkörper 2 abzustützen. In dem in der Abbildung ausgeführten Ausführungsbeispiel ist der Stützring 17 axial über das rückwärtige Ende 3 des Futterkörpers 2 hinaus als Stützhülse 20 axial verlängert. Dadurch ist gewährleistet, dass beim Anschluss des Bohrfutters 1 an eine Maschinenspindel ein Überlapp zwischen dem Bohrfutter 1 und dem Maschinengehäuse der Maschinenspindel gegeben ist, wodurch ein Eindringen von Bohrstaub in das Innere des Bohrfutters effektiv verhindert wird.

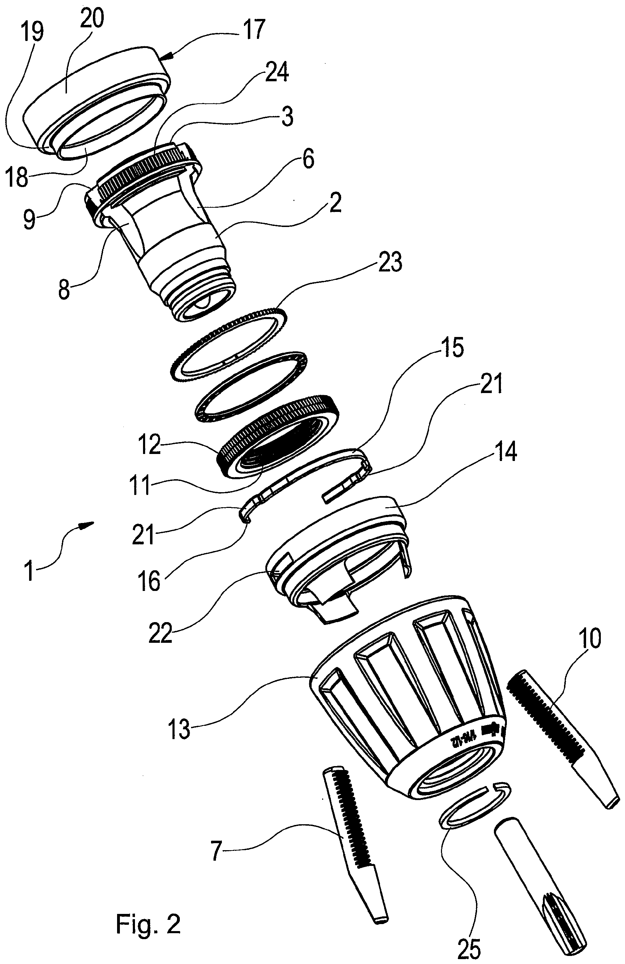

Figur 2 zeigt in einer Explosionsdarstellung den Aufbau des erfindungsgemäßen Bohrfutters 1. Zu sehen ist hierbei auch insbesondere die aus dem Federbügel 15 gebildete Sperrglied 16, die auf der Innenseite der Zwischenhülse 14 gelagert ist und Nocken 21 aufweist, die durch in der Zwischenhülse 14 ausgebildeten Durchgriffen 22 auf die Spannhülse 13 einwirken. Weiterhin ist auch der Kranz der Sperrausnehmungen 23 ersichtlich, der koaxial auf den Futterkörper 2 aufgeführt wird, und in den das Sperrglied 16 eingreift. Durch einen Formschluss ist der Kranz der Sperrausnehmungen 23 drehfest am Futterkörper 2 befestigt.

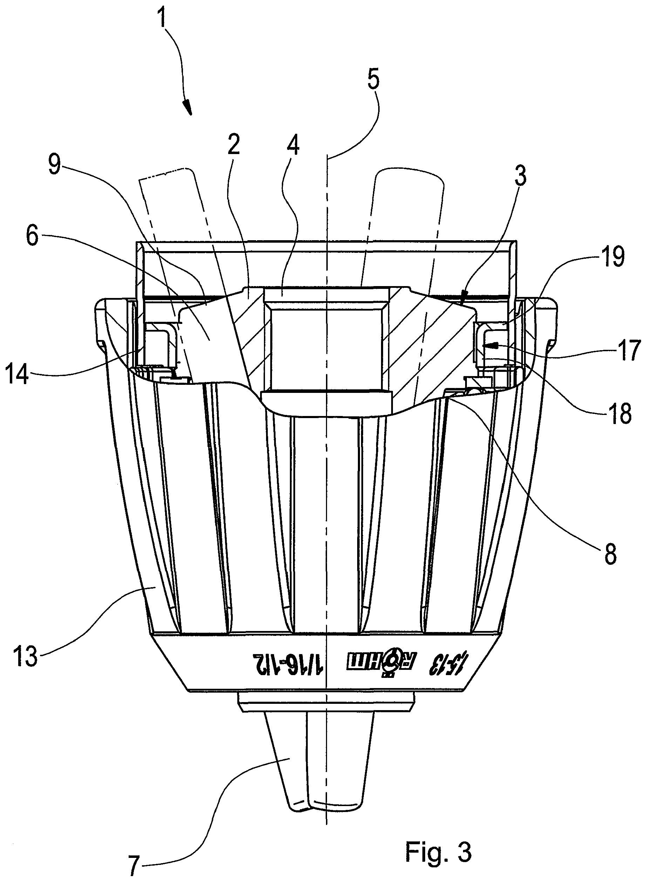

Figur 3 zeigt eine weitere Ausführungsform eines erfindungsgemäßen Bohrfutters 1, bei dem die Zwischenhülse 14 axial über das rückwärtige Ende 3 des Futterkörpers 2 hinaus verlängert ist, um mit einem Maschinengehäuse einer an die Spindelaufnahme 4 anzuschließenden Maschinenspindel einen Überlapp zu bilden. Bei dem in der Figur 3 dargestellten Ausführungsbeispiel erfolgt die radiale Abstützung der Spannhülse13 an dem Futterkörper 2 mittelbar über die Zwischenhülse 14 und den Stützring 17.

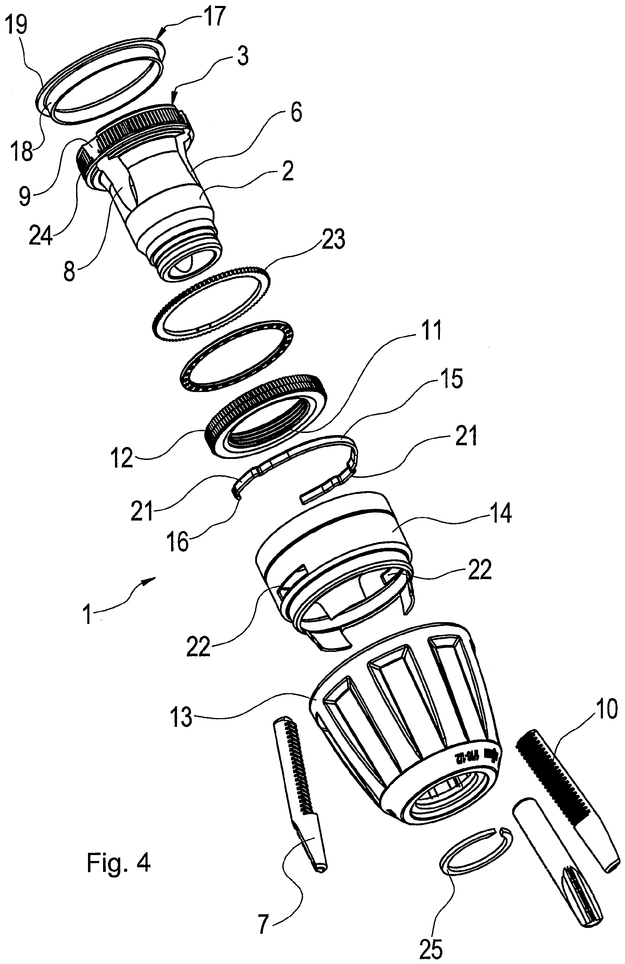

Aus der in der Figur 4 dargestellten Explosionsdarstellung wird insbesondere der radiale Kragen 19 sichtbar, der den zylindrischen Teil 18 des Stützringes 17 radial erweitert und der zur mittelbaren Abstützung der Spannhülse 13 über die Zwischenhülse 14 an dem Futterkörper 2 vorgesehen ist. Wie der Figur 4 weiterhin zu entnehmen ist, lässt sich das erfindungsgemäße Bohrfutter 1 einfach montieren. Am Futterkörper 2 wird zunächst der Stützring 17 befestigt, der auf den Futterkörper 2 gepresst ist, der zu diesem Zweck formschlussbegünstigende Zähne 24 aufweist. Dann wird der Kranz der Sperrausnehmungen 23 axial von vorn auf den Futterkörper 2 aufgeschoben. Nachdem das Sperrglied 16 in der Zwischenhülse 14 platziert ist, wird aus der Zwischenhülse 14 und dem Gewindering 12 eine Einheit gebildet, die dann ebenfalls von vorn auf den Futterkörper 2 geschoben wird und an diesem abgestützt ist. Abschließend wird die Spannhülse 13 aufgeschoben und deren axiale Lage durch einen Spannring 25 festgelegt.

### Bezugszeichenliste:

- 1: Bohrfutter
- 2: Futterkörper
- 3: rückwärtiges Ende
- 4: Spindelaufnahme
- 5: Futterachse
- 6: Führungskanäle
- 7: Spannbacken
- 8: Anschneidung
- 9: Mündung
- 10: Verzahnung
- 11: Spanngewinde
- 12: Gewindering
- 13: Spannhülse
- 14: Zwischenhülse
- 15: Federbügel
- 16: Sperrglied
- 17: Stützring
- 18: zylindrischer Abschnitt
- 19: radialen Kragen
- 20: Stützhülse
- 21: Nocken
- 22: Durchgriff
- 23: Sperrausnehmungen
- 24: Zähne
- 25: Spannring

## Patentansprüche

1. Bohrfutter mit einem Futterkörper (2), der an seinem rückwärtigen Ende (3) eine Spindelaufnahme (4) aufweist, sowie mit zwischen sich eine Werkzeugaufnahme bildenden Spannbacken (7), die in im Futterkörper (2) geneigt zur Futterachse (5) verlaufenden, in Anschneidungen (8) die Umfangsfläche des Futterkörpers (2) schneidenden und in am rückwärtigen Ende (3) des Futterkörpers (2) gelegenen Mündungen (9) aus dem Futterkörper (2) mündenden Führungskanälen (6) verschiebbar sind und zur Verstellung zwischen einer Offenstellung und einer Spannstellung über eine Verzahnung (10) mit dem Spanngewinde (11) eines am Futterkörper (2) drehbar geführten Gewinderinges (12) im Eingriff stehen, zu dessen Betätigung eine koaxiale, am Futterkörper (2) geführte Spannhülse (13) vorgesehen ist, wobei der Futterkörper (2) als Kurzkörper gebildet ist, so dass die Spannbacken (7) in der Offenstellung aus den Mündungen (9) über das rückwärtige Ende (3) des Futterkörpers (2) hinausragen, **dadurch gekennzeichnet, dass** ein Stützring (17) vorgesehen ist, der axial zwischen den Mündungen (9) und den Anschneidungen (8) angeordnet ist, zur radialen Führung der Spannhülse (13) an dem Futterkörper (2).

2. Bohrfutter nach Anspruch 1, **dadurch gekennzeichnet, dass** der Gewindering (12) drehfest mit einer ein Sperrglied (16) tragenden Zwischenhülse (14) verbunden ist, wobei das Sperrglied (16) unter der Kraft einer Feder radial an der Spannhülse (13) abgestützt ist und mittels einer an der Spannhülse (13) ausgebildeten Steuerkurve in Sperrausnehmungen (23) einrückbar ist, die auf einem koaxialen Kranz angeordnet dem Futterkörper (2) drehfest zugeordnet sind.

3. Bohrfutter nach Anspruch 2, **dadurch gekennzeichnet, dass** das Sperrglied (16) als am Innenumfang der Zwischenhülse (14) gelagerter Federbügel (15) gebildet ist, der mit einem Nocken (21) durch einen Durchgriff (22) der Zwischenhülse (14) in die Steuerkurve eingreift und durch eine Drehung der Spannhülse (13) relativ zu der Zwischenhülse (14) zwischen einer in die Sperrausnehmungen (23) eingerückten Stellung und einer ausgerückten Stellung verstellbar ist.

4. Bohrfutter nach einem der Ansprüche 1 bis 3, **dadurch gekennzeichnet, dass** der Stützring (17) zur Befestigung an dem Futterkörper (2) einen zylindrischen Abschnitt (18) und einen radialen Kragen (19) zur Führung der Spannhülse (13) umfasst.

5. Bohrfutter nach einem der Ansprüche 1 bis 4, **dadurch gekennzeichnet, dass** der Stützring (17) drehfest und axial unverschiebbar an dem Futterkörper (2) befestigt ist.

6. Bohrfutter nach Anspruch 5, **dadurch gekennzeichnet, dass** der Stützring (17) auf den Futterkörper (2) gepresst ist.

7. Bohrfutter nach Anspruch 6, **dadurch gekennzeichnet, dass** am Futterkörper (2) im Bereich zwischen den Mündungen (9) und den Anschneidungen (8) außenumfangsseitig formschlussbegünstigende Zähne (24) ausgebildet sind.

8. Bohrfutter nach einem der Ansprüche 1 bis 7, **dadurch gekennzeichnet, dass** der Stützring (17) über das rückwärtige Ende (3) des Futterkörpers (2) hinaus als eine Stützhülse (20) axial verlängert ist, und dass die Spannhülse (13) unmittelbar an dem Stützring (17) geführt ist.

9. Bohrfutter nach einem der Ansprüche 1 bis 7, **dadurch gekennzeichnet, dass** die Zwischenhülse (14) über das rückwärtige Ende (3) des Futterkörpers (2) hinaus axial verlängert ist, und dass die Spannhülse (13) mittelbar über die Zwischenhülse (14) an dem Stützring (17) geführt ist.

10. Bohrfutter nach einem der Ansprüche 1 bis 9, **dadurch gekennzeichnet, dass** der Gewindering (12) einstückig gebildet ist und durch die Spannhülse (13) unmittelbar oder mittelbar axial gesichert ist.

## Claims

1. A drill chuck with a chuck body (2), which has a spindle receptacle (4) at its rear end (3), and with jaws (7) forming a tool receptacle therebetween, which are displaceable in guide channels (6) formed in the chuck body (2) inclined to the chuck axis (5), intersecting the peripheral surface of the chuck body (2) in notches (8) and open out of the chuck body (2) at the rear end (3) of the chuck body (2) in openings (9), and which are for adjustment between an open position and a clamping position engaged via a toothing (10) with the clamping thread (11) of a threaded ring (12) guided on the chuck body (2), for which actuating a coaxial clamping sleeve (13) guided on the chuck body (2) is provided, wherein the chuck body (2) is formed as a short body so that the jaws (7) project in the open position out of the openings (9) beyond the rear end (3) of the chuck body (2), **characterized in that** a support ring (17) is provided, which is arranged axially between the openings (9) and the notches (8), for the radial guidance of the clamping sleeve (13) on the chuck body (2).

2. The drill chuck according to claim 1, **characterized in that** the threaded ring (12) is rotationally fixed to an intermediate sleeve (14) supporting a locking member (16), wherein the locking member (16) is radially supported on the clamping sleeve (13) under the force of a spring and can be engaged by a control cam formed on the clamping sleeve (13) into locking recesses (23), which are arranged on a coaxial rim rotationally fixed to the chuck body (2).

3. The drill chuck according to claim 2, **characterized in that** the locking member (16) is formed as a spring clip (15) supported on the inner circumference of the intermediate sleeve (14), which is engaging with a cam (21) through a slot (22) of the intermediate sleeve (14) into the control cam and can be moved via a rotation of the clamping sleeve (13) relative to the intermediate sleeve (14) between a position engaging the locking recesses (23) and a release position.

4. The drill chuck according to one of claims 1 to 3, **characterized in that** the support ring (17) comprises a cylindrical section (18) for attachment to the chuck body (2) and a radial collar (19) for guiding the clamping sleeve (13).

5. The drill chuck according to one of claims 1 to 4, **characterized in that** the support ring (17) is rotationally fixed and axially immovable fastened to the chuck body (2).

6. The drill chuck according to claim 5, **characterized in that** the support ring (17) is pressed onto the chuck body (2).

7. The drill chuck according to claim 6, **characterized in that** teeth (24) facilitating positive locking are provided on the outer circumference of the chuck body (2) in the region between the openings (9) and the notches (8).

8. The drill chuck according to one of claims 1 to 7, **characterized in that** the support ring (17) is extended axially beyond the rear end (3) of the chuck body (2) as a support sleeve (20), and that the clamping sleeve (13) is guided directly on the support ring (17).

9. The drill chuck according to one of claims 1 to 7, **characterized in that** the intermediate sleeve (14) is extended axially beyond the rear end (3) of the chuck body (2), and that the clamping sleeve (13) is guided indirectly on the support ring (17) through the intermediate sleeve (14).

10. The drill chuck according to one of Claims 1 to 9, **characterized in that** the threaded ring (12) is formed as one piece, and is secured axially either directly or indirectly by the clamping sleeve (13).

## Revendications

1. Mandrin de perçage comprenant un corps de mandrin (2) qui comporte à son extrémité arrière (3) un logement de broche (4) et comprenant des mors (7) qui forment entre eux un logement d'outil, peuvent coulisser dans des canaux de guidage (6) qui s'étendent dans le corps de mandrin (2) avec une inclinaison par rapport à l'axe de mandrin (5), qui coupent la surface périphérique du corps de mandrin (2) dans des encoches (8) et qui débouchent hors du corps de mandrin (2) dans des ouvertures (9) ménagées à l'extrémité arrière (3) du corps de mandrin (2) et, pour alterner entre une position ouverte et une position serrée, sont en prise par l'intermédiaire d'une denture (10) avec le filet de serrage (11) d'un anneau fileté (12) qui est guidé à rotation sur le corps de mandrin (2) et pour l'actionnement duquel est prévu un manchon de blocage (13) coaxial guidé sur le corps de mandrin (2), le corps de mandrin (2) étant conformé en corps court, de sorte que, en position ouverte, les mors (7) dépassent des ouvertures (9) au-delà de l'extrémité arrière (3) du corps de mandrin (2), **caractérisé en ce qu'**il est prévu un anneau d'appui (11) qui est disposé axialement entre les ouvertures (9) et les encoches (8) pour guider radialement le manchon de blocage (13) sur le corps de mandrin (2).

2. Mandrin de perçage selon la revendication 1, **caractérisé en ce que** l'anneau fileté (12) est solidarisé en rotation avec un manchon intermédiaire (14) portant un organe de blocage (16), l'organe de blocage (16) prenant appui radialement sur le manchon de blocage (13) sous l'action d'un ressort et pouvant s'engager, au moyen d'une came de commande ménagée sur le manchon de blocage (13), dans des évidements de blocage (23) qui sont associés au corps de mandrin (2) de manière fixe en rotation en étant disposés sur une couronne coaxiale.

3. Mandrin de perçage selon la revendication 2, **caractérisé en ce que** l'organe de blocage (16) est conformé en étrier élastique (15) qui est monté sur la périphérie intérieure du manchon intermédiaire (14) et qui, par le biais d'un ergot (21), s'engage dans la came de commande à travers un passage (22) du manchon intermédiaire (14) et, par une rotation du manchon de blocage (13) par rapport au manchon intermédiaire (14), est réglable entre une position engagée dans les évidements de blocage (23) et une position dégagée.

4. Mandrin de perçage selon une des revendications 1 à 3, **caractérisé en ce que**, pour sa fixation sur le corps de mandrin (2), l'anneau d'appui (17) comporte une portion cylindrique (18) et un collet radial (19) pour guider le manchon de blocage (13).

5. Mandrin de perçage selon une des revendications 1 à 4, **caractérisé en ce que** l'anneau d'appui (17) est fixé au corps de mandrin (2) de manière solidaire en rotation et sans possibilité de translation axiale.

6. Mandrin de perçage selon la revendication 5, **caractérisé en ce que** l'anneau d'appui (17) est pressé contre le corps de mandrin (2).

7. Mandrin de perçage selon la revendication 6, **caractérisé en ce que**, sur le corps de mandrin (2), dans la zone située entre les ouvertures (9) et les encoches (8), sont ménagées des dents (24) favorisait la liaison par complémentarité de formes côté périphérie extérieure.

8. Mandrin de perçage selon une des revendications 1 à 7, **caractérisé en ce que** l'anneau d'appui (17) est prolongé axialement sous la forme d'un manchon d'appui (20) au-delà de l'extrémité arrière (3) du corps de mandrin (2), et **en ce que** le manchon de blocage (13) est guidé directement sur l'anneau d'appui (17).

9. Mandrin de perçage selon une des revendications 1 à 7, **caractérise en ce que** le manchon intermédiaire (14) est prolongé axialement au-delà de l'extrémité arrière (3) du corps de mandrin (2), et **en ce que** le manchon de blocage (13) est guidé indirectement sur l'anneau d'appui (17) par l'intermédiaire du manchon intermédiaire (14).

10. Mandrin de perçage selon une des revendications 1 à 9, **caractérisé en ce que** l'anneau fileté (12) est formé d'une seule pièce et est bloqué axialement directement ou indirectement par l'intermédiaire du manchon de blocage (13).
